**Europäisches Patentamt**

**European Patent Office**

**Office européen des brevets**

(19)

(11) Publication number : **0 342 581 B1**

# EUROPEAN PATENT SPECIFICATION

(12)

(45) Date of publication of patent specification :
**11.03.92 Bulletin 92/11**

(51) Int. Cl.⁵ : **G05F 3/24**, G05F 3/20

(21) Application number : **89108739.7**

(22) Date of filing : **16.05.89**

(54) **Voltage level conversion circuit.**

(30) Priority : **16.05.88 US 194356**

(43) Date of publication of application :
**23.11.89 Bulletin 89/47**

(45) Publication of the grant of the patent :
**11.03.92 Bulletin 92/11**

(84) Designated Contracting States :
**DE FR GB IT**

(56) References cited :
**EP-A- 0 294 882**
**WO-A-82/04143**

(73) Proprietor : **MOTOROLA, INC.**
**1303 East Algonquin Road**
**Schaumburg, IL 60196 (US)**

(72) Inventor : **Dunn, William Charles**
**3206 E. Encanto Street**
**Mesa Arizona 85213 (US)**

(74) Representative : **Hudson, Peter David et al**
**MOTOROLA European Intellectual Property**
**Operations Jays Close Viables Industrial**
**Estate**
**Basingstoke, Hampshire RG22 4PD (GB)**

## Description

Field of the Invention

This invention relates in general to voltage level shifting circuits and more particularly, to a semiconductor voltage level conversion circuit for providing an output voltage that is shifted above both the level of the supply voltage and the breakdown voltage of the semiconductor circuit.

Background of the Invention

It is common practice in semiconductor integrated circuit technology to interface different transistor technologies in electronic systems and subsystems. It is further common practice to integrate different transistor technologies on the same semiconductor chip. In order to interface the different technologies, it is often necessary to provide voltage level shifting at the interface of the different technologies for proper circuit operation. For example, when interfacing emitter coupled logic (ECL) to metal-oxide field effect transistor (MOSFET) circuits, it may be necessary to shift voltages between 1.5 volts and 15 volts.

Further challenges of interfacing different technologies are presented when it is necessary to interface low voltage circuits to high voltage circuits. A typical example includes low voltage CMOS circuits that may be used in electronic systems for their low power dissipation and high transistor density characteristics, but may be required to drive high voltage circuits as may be found in display driver and automotive applications. The high voltage circuits often have breakdown voltages that are greater than can be tolerated by the low voltage circuits.

In automotive circuits, bipolar and MOS power transistors having high voltage breakdown characteristics are used to drive solenoids and DC motors for such applications as anti-skid braking systems, electric fuel pumps, windshield wipers, power windows and locks, etc. These power transistors, however, are normally controlled and driven by low power, low voltage control circuits. Power field effect transistors such as lateral and vertical DMOS devices are especially useful for driving solenoids and DC motors since the transistors exhibit a very low on resistance and thus have a very small voltage drop across their load terminals. Such power field effect transistors then, are capable of driving solenoids and DC motors very efficiently while being able to withstand high voltages.

In order to reduce the power field effect transistor on-resistance to a minimum, it is necessary to drive the gate voltage above the supply voltage of the power devices. The battery voltage in the automobile, and hence the supply voltage of the power field effect transistor, may vary from approximately 5.5 voltage up to 36 volts. Breakdown voltages of present-day power field effect transistors may exceed 80 volts. It would be desirable then, to drive the gate of the power field effect transistor to a level higher than its supply voltage but less than the breakdown voltage of the power field effect transistor. Because low voltage semiconductor circuits have excellent transistor densities and good yield, they are extremely useful as control and driving circuits for high voltage circuit applications when the high voltage interface can be bridged.

European Patent Application No. EP-A-0294882 is noted as disclosing subject matter related to the present invention. The prior art generates a low power supply voltage from a high voltage terminal on the integrated circuit using complemented logic signals which are amplified but limited to be below the given breakdown voltage of the process used thereby eliminating the need for isolating the low voltage circuitry from the high voltage supply.

Thus, what is needed is a semiconductor voltage level conversion circuit for providing an output voltage that is shifted above both the level of the supply voltage and the breakdown voltage of the semiconductor circuit.

Summary of the Invention

In accordance with the present invention, there is provided a voltage level conversion circuit manufactured with a semiconductor process having a breakdown voltage, said circuit comprising:

a first supply voltage terminal for receiving a first voltage;

a second supply voltage terminal for receiving a second voltage;

an input terminal for receiving an input signal;

an output terminal for providing an output signal;

first means coupled between said first and second supply voltage terminals and coupled to said input terminal for providing true and complemented signals having voltage levels greater than the magnitude of said input signal, but less than the breakdown voltage;

second means coupled between said first and second supply voltage terminals and coupled to said first means for increasing the current drive of said true and complemented signals;

as commonly known in the prior art, and characterised by third means coupled to said second means at first and second nodes and comprising:

a first capacitor having a first terminal coupled to said first node and having a second terminal;

a second capacitor having a first terminal coupled to said second node and having a second terminal;

a first diode having an anode coupled to said second terminal of said first capacitor and a cathode;

and

a second diode having an anode coupled to said second terminal of said second capacitor and a cathode,

said third means providing a shifted true signal and a shifted complemented signal at the cathodes of said first and second diodes respectively, the magnitude of the voltage levels of said shifted true signal and said shifted complemented signal being greater than the breakdown voltage; and

fourth means coupled between said third means and said output terminal for providing said output signal having a voltage level greater than the breakdown voltage and having a frequency equal to two times the frequency of said input signal.

The above and other objects, features, and advantages of the present invention will be better understood from the following detailed description taken in conjunction with the accompanying drawings.

Brief Description of the Drawings

Figure 1 is a schematic diagram of the preferred embodiment of the present invention.

Figure 2 is a waveform diagram of selected signals in the preferred embodiment.

Detailed Description of the Invention

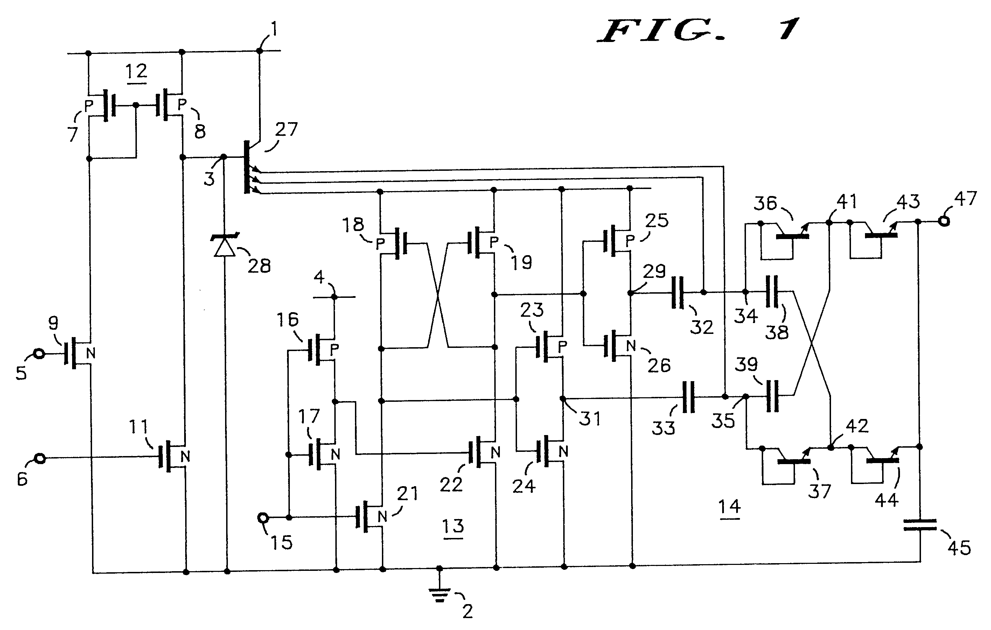

Figure 1 depicts a voltage level conversion circuit that may be fabricated in a standard semiconductor process, comprising a current mirror 12, an interface circuit 13, and a voltage conversion circuit 14. The current mirror 12 comprises field effect transistors 7 and 8 having their sources connected to a supply voltage terminal 1, and their gates connected to the drain of the field effect transistor 7. The drain of the field effect transistor 8 is connected to a voltage node 3. The field effect transistor 7 is connected to function as a diode and sets the voltage at the gate of the field effect transistor 8 so that the current flowing in the field effect transistor 7 is mirrored in the field effect transistor 8.

Field effect transistors 9 and 11 have their sources connected to a supply voltage terminal 2, their gates connected to input terminals 5 and 6, respectively, and their drains connected to the drains of the field effect transistors 7 and 8, respectively. A bias voltage applied to the input terminal 5 sets the amount of current flowing in the current mirror 12. A control signal applied to the input terminal 6 selectively turns the current mirror 12 on or off. The conversion voltage supplied at the voltage node 3 is determined by the magnitude of the battery supply voltage at the supply voltage terminal 1 and the magnitude of the current flowing in the current mirror 12.

The interface circuit 13 comprises a zener diode 28 having a cathode connected to the voltage node 3 and an anode connected to the supply voltage terminal 2. The zener diode has a zener breakdown voltage that is less than the gate oxide breakdown voltage of the field effect transistors in the voltage level conversion circuit. The gate oxide breakdown voltage in standard semiconductor processes is typically less than 25 volts. In automotive circuit applications, the battery supply voltage is supplied directly from a 12 or 24 volt lead-acid battery and can vary from 5.5 volts to 36 volts depending on environmental conditions. If the conversion voltage should exceed the zener breakdown voltage, due in part to fluctuations in the battery supply voltage, the zener diode 28 will avalanche to keep the voltage at a level below the gate oxide breakdown voltage.

A field effect transistor 16 has a source connected to a supply voltage terminal 4, a gate connected to an input terminal 15, and a drain connected to the drain of a field effect transistor 17. The field effect transistor 17 has a gate connected to the input terminal 15, and a source connected to the supply voltage terminal 2. A regulated voltage, derived from the battery supply voltage, is applied to the supply voltage terminal 4 and is typically equal to 5.0 volts. The field effect transistors 16 and 17 form an inverter whose output varies from 0.0 volts to 5.0 volts and is the complement of the oscillator input signal at the input terminal 15.

A bipolar transistor 27 has a collector connected to the supply voltage terminal 1 and a base connected to the voltage node 3. Field effect transistors 18 and 19 have their sources connected to a first emitter of the bipolar transistor 27, and their drains connected to the drains of field effect transistors 21 and 22 respectively. The gate of the field effect transistor 18 is connected to the drain of the field effect transistor 19, and the gate of the field effect transistor 19 is connected to the drain of the field effect transistor 18. The field effect transistor 21 has a gate connected to the input terminal 15 and a source connected to the supply voltage terminal 2. The field effect transistor 22 has a gate connected to the drain of the field effect transistor 16, and a source connected to the supply voltage terminal 2. The field effect transistors 18, 19, 21, and 22 provide a shifted and a complemented shifted voltage signal of the oscillator input signal at the drains of the field effect transistors 19 and 18 respectively. The magnitude of the shifted and complemented shifted voltages vary from the conversion voltage less a base-emitter voltage ($V_{be}$) to the ground supply voltage potential at the supply voltage terminal 2.

The sources of field effect transistors 23 and 25 are connected to the first emitter of the bipolar transistor 27, the gates are connected to the gates of field effect transistors 24 and 26, respectively, and the drains are connected to the nodes 31 and 29, respectively. The field effect transistors 24 and 26 have their sources connected to the supply voltage terminal 2, and their gates connected to the drains of the field effect transistors 18 and 19, respectively, and the drains are connected to the nodes 31 and 29 respectively. The field effect transistors 23 and 24, and 25 and 26 form two inverters to provide additional current drive and wave-shaping of the shifted and the complemented shifted signals.

The interface circuit 13 functionally converts an input signal that varies from 0.0 volts to 5.0 volts and provides true and complemented output voltages that vary from 0.0 volts to the conversion voltage less a $V_{be}$. And the conversion voltage is limited to the zener breakdown voltage which is selected to be less than the gate oxide breakdown voltage. Further, the interface circuit 13 is coupled to a battery supply voltage that may exceed the gate oxide breakdown voltage of the field effect transistors contained therein without subjecting the gate oxide of the field effect transistors to the full potential of the battery supply voltage.

A voltage conversion circuit 14 comprises a capacitor 32 coupled between the node 29 and a node 34, and a capacitor 33 coupled between the node 31 and a node 35. The nodes 34 and 35 are connected to a second and third emitter, respectively, of the bipolar transistor 27. A capacitor 38 is coupled between the node 34 and a node 42, and a capacitor 39 is coupled between the node 35 and a node 41. A bipolar transistor 36 is connected as a diode having a base and a collector connected to the node 34 and an emitter connected to the node 41. A bipolar transistor 37 is connected as a diode having a base and a collector connected to the node 35 and an emitter connected to the node 42. Bipolar transistors 43 and 44 are connected as diodes having the emitters connected to an output terminal 47. The bipolar transistor 43 has a base and a collector connected to the node 41, and the bipolar transistor 44 has a base and a collector connected to the node 42. A capacitor 45 is coupled between the output terminal 47 and the supply voltage terminal 2.

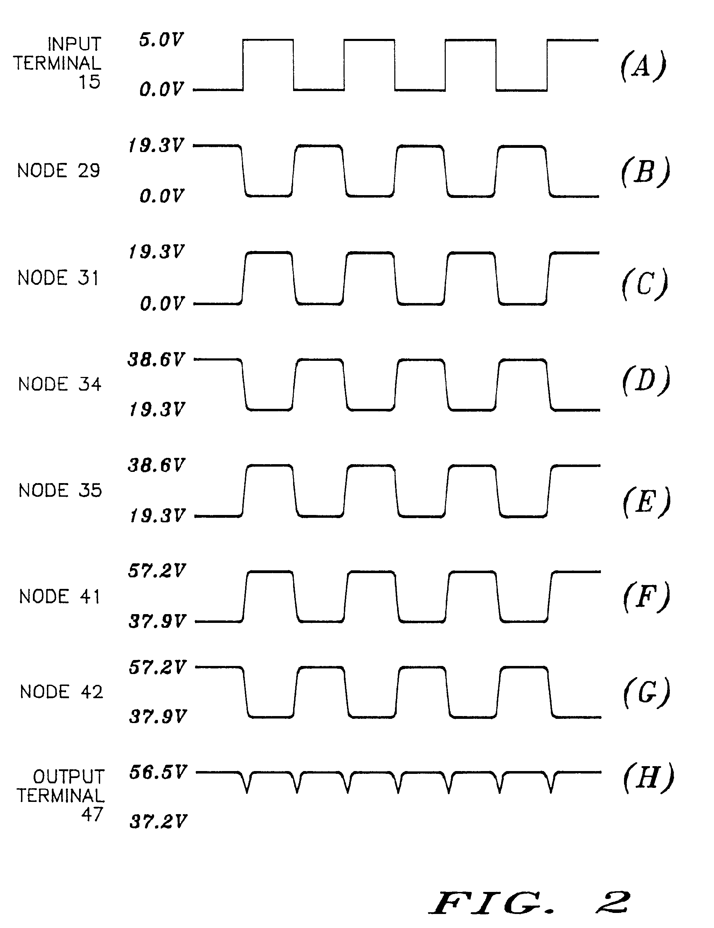

The following discussion of the circuit operation assumes a battery supply voltage of 36 volts, a base-emitter voltage of 0.7 volts, an input signal that varies from 0.0 volts to 5.0 volts, and a zener breakdown voltage of 20.0 volts. These voltage levels are used for purposes of example only; the actual voltages may vary substantially under normal circuit operation. Figure 2 illustrates the voltage waveforms that would be expected at the specified nodes in the voltage level conversion circuit.

The current mirror 12 provides a conversion voltage at the voltage node 3 which is a function of the bias voltage and the battery supply voltage, and further supplies a base current to the bipolar transistor 27. With a battery supply voltage of 36.0 volts, the conversion voltage will try to rise above the zener breakdown voltage of the zener diode 28, causing it to avalanche therein limiting the conversion voltage to 20.0 volts. As the battery voltage falls, for example to 6.0 volts (as could occur when starting an automobile in freezing weather), the conversion voltage will drop proportionally and the zener diode 28 will not be caused to avalanche to limit the conversion voltage.

The voltage at the first emitter of the bipolar transistor 27 will equal the conversion voltage less a $V_{be}$, and is limited to 19.3 volts since the conversion voltage is limited to 20.0 volts. Referring to figure 2, the oscillator input signal is shown as a square wave at input terminal 15 which results in the waveforms shown at the nodes 29 and 31. The signal at the node 29 is inverted and has a magnitude that equals the conversion voltage less a $V_{be}$, and the signal at the node 31 is non-inverted with the same magnitude. When the voltage at node 29 is at 0.0 volts, the voltage at the node 34 will equal the emitter voltage of the second emitter of the bipolar transistor 27 which is also equal to the conversion voltage less a $V_{be}$ or 19.3 volts. Similarly, when the voltage at node 31 is at 0.0 volts, the voltage at the node 35 will equal the emitter voltage of the third emitter of the bipolar transistor 27 which is also equal to the conversion voltage less a $V_{be}$ or 19.3 volts.

As the voltage at the node 29 rises from 0.0 volts to 19.3 volts, the voltage at the node 34 will charge through the capacitor 32 to 38.6 volts or an additional 19.3 volts. As the voltage at the node 34 increases a $V_{be}$ above the conversion voltage, the second emitter becomes reverse biased and isolates the node 34 from the voltage node 3. When the voltage at the node 29 falls towards 0.0 volts, the voltage at the node 34 discharges towards 0.0 volts through the capacitor 32. However, as the node 34 falls a $V_{be}$ below the conversion voltage, the second emitter becomes forward biased to keep the node 34 charged to 19.3 volts. The voltage at the nodes 31 and 35 charges and discharges through the capacitor 33 in the same manner as the nodes 29 and 34, respectively. The third emitter of the bipolar transistor 27 operates analogously to the second emitter. The voltages at the nodes 34 and 35 are 180 degrees out of phase as shown in figure 2.

The voltage at the node 41 is equal to the voltage at the node 34 less a $V_{be}$ when the voltage at the node 35 is at a minimum. As the voltage at the node 35 increases from 19.3 volts to 38.6 volts, it charges through the capacitor 39 to increase the voltage at the node 41 by the same amount. When the voltage at the node 41 increase to a $V_{be}$ above the voltage at the node 34, the diode action of the bipolar transistor 36 isolates the node 34 from the node 41. And when the voltage at the node 35 decreases from 38.6 volts to 19.3 volts, the voltage at the node 41 will start to decrease from 57.2 volts towards 19.3 volts. However, as the voltage at the node 41 falls a $V_{be}$ below the voltage at the node 34, the bipolar transistor 36 becomes forward biased to keep the node 41 charged to a voltage that is a $V_{be}$ below the voltage at the node 34 or 37.9 volts. The voltage at the node 42 charges and discharges in an analogous manner as that of the node 41, but through the bipolar transistor 37 and the capacitor 38 and 180 degrees out of phase as shown in figure 2.

The output voltage at the output terminal 47 is the result of the alternating peak values of the voltages at the nodes 41 and 42. When the voltage at the node 41 is at its maximum of 57.2 volts, the voltage at the node 42 will be at its minimum of 37.9 volts. This causes the output voltage to equal the voltage at the node 41 less a $V_{be}$ or 56.5 volts which further causes the bipolar transistor 44 to act as a reverse biased diode therein isolating the output terminal 47 from the node 42. Alternately, when the voltage at the node 42 is at its maximum of 57.2 volts, the voltage at the node 41 will be at its minimum of 37.9 volts. This causes the output voltage to equal the voltage at the node 42 less a $V_{be}$ or 56.5 volts which further causes the bipolar transistor 43 to act as a reverse biased diode therein isolating the output terminal 47 from the node 41.

The maximum magnitude of the output voltage can be calculated by:
$$V_{out} = 3(V_{conv}) - 5(V_{be})$$
where $V_{conv}$ is the conversion voltage, and $V_{out}$ is the output voltage. Also the frequency of the output voltage is equal to two times the frequency of the input signal. A result and advantage of the frequency doubling is a decrease in the impedance at the output terminal 47. A magnitude of 56.5 volts at the output terminal may be safely provided without causing gate oxide damage to the MOS devices. The potential that appears across the capacitors 32, 33, 38, and 39 never exceeds the conversion voltage. This allows the capacitors 32, 33, 38, and 39 to be fabricated by using polysilicon over thin oxide (gate oxide) without exceeding the gate oxide breakdown voltage. The advantage of this is the capability of making capacitors having a higher capacitance per unit area, and thus less silicon area per capacitor.

The output voltage has a high enough magnitude that it can be used to overdrive the gate of a power field effect transistor. In the automobile application, a power field effect transistor would be coupled directly to the battery supply voltage. Should the battery supply voltage reach 36 volts, the voltage level conversion circuit provides an output voltage of 56.5 volts which is sufficient to operate the power field effect transistor in its most efficient operating region (minimum channel resistance).

By now it should be appreciated that there has been provided a semiconductor voltage level conversion circuit for providing an output voltage that is shifted above both the level of the supply voltage and the breakdown voltage of the semiconductor circuit.

## Claims

1. A voltage level conversion circuit, in semiconductor technology having a defined breakdown voltage, said circuit comprising:
   a first supply voltage terminal (3) for receiving a first voltage;
   a second supply voltage terminal (2) for receiving a second voltage;
   an input terminal (15) for receiving an input signal;
   an output terminal (47) for providing an output signal;
   first means (13) coupled between said first and second supply voltage terminals and coupled to said input terminal (15) for providing true and complemented signals having voltage levels greater than the magnitude of said input signal, but less than the breakdown voltage;
   second means (23-26) coupled between said first and second supply voltage terminals and coupled to said first means (13) for increasing the current drive of said true and complemented signals; characterised by:
   third means (32-37) coupled to said second means (23-26) at first and second nodes (31, 29) and comprising:
   a first capacitor (33) having a first terminal coupled to said first node (31) and having a second terminal;
   a second capacitor (32) having a first terminal coupled to said second node (29) and having a second terminal;
   a first diode (37) having an anode coupled to said second terminal of said first capacitor (33) and a cathode; and
   a second diode (36) having an anode coupled to said second terminal of said second capacitor (32) and a cathode,
   said third means providing a shifted true signal and a shifted complemented signal at the cathodes of said first and second diodes respectively, the magnitude of the voltage levels of said shifted true signal and said shifted complemented signal being greater than the breakdown voltage; and
   fourth means (38, 39, 43-45) coupled between said third means (32-37) and said output terminal (47) for providing said output signal having a voltage level greater than the breakdown voltage and having a frequency equal to two times the frequency of said input signal.

2. A voltage level conversion circuit according to claim 1 wherein said fourth means comprises:
   a third capacitor (38) having a first terminal coupled to said second terminal of said second capacitor (32) and having a second terminal coupled to said cathode of said first diode (37);
   a fourth capacitor (39) having a first terminal coupled to said second terminal of said first capacitor (33) and having a second terminal coupled to said cathode of said second diode (36);

a third diode (43) having an anode coupled to said cathode of said second diode (36) and a cathode coupled to said output terminal (47);

a fourth diode (44) having an anode coupled to said cathode of said first diode (37) and a cathode coupled to said output terminal (47); and

a fifth capacitor (45) having a first terminal coupled to said output terminal (47) and a second terminal coupled to said second supply voltage terminal (2).

3. A voltage level conversion circuit according to claim 1 further comprising a bipolar transistor (27) having a collector coupled to a third supply voltage terminal (1), a base coupled to said first supply voltage terminal (3), a first emitter coupled to said second terminal of said first capacitor (33), a second emitter coupled to said second terminal of said second capacitor (32) and a third emitter.

4. A voltage level conversion circuit according to claim 3, further comprising a zener diode (28) having a cathode coupled to said first supply voltage terminal (3) and an anode coupled to said second supply voltage terminal (2) for limiting said first voltage to a magnitude less than the breakdown voltage.

5. A voltage level conversion circuit according to claim 3 or 4 further comprising a fifth means (7-11) coupled between said third supply voltage terminal (1) and said second supply voltage terminal (2) for selectively providing said first voltage to said first supply voltage terminal (3).

6. A voltage level conversion circuit according to claim 5 wherein said a fifth means comprises:

a bias voltage terminal (5) for receiving a bias voltage;

a control terminal (6) for receiving a control signal;

a first field effect transistor (7) having a source coupled to said third supply voltage terminal (1) and having a gate coupled to a drain;

a second field effect transistor (9) having a drain coupled to said drain of said first field effect transistor (7), a gate coupled to said bias voltage terminal (5), and a source coupled to said second supply voltage terminal (2);

a third field effect transistor (8) having a source coupled to said third supply voltage terminal (1), a gate coupled to said gate of said first field effect transistor (7), and a drain coupled to said first supply voltage terminal (3); and

a fourth field effect transistor (11) having a drain coupled to said first supply voltage terminal (3), a gate coupled to said control terminal (6), and a source coupled to said second supply voltage terminal (2).

7. A voltage level conversion circuit according to claim 3, 4, 5 or 6 wherein said first means comprises:

a first field effect transistor (16) having a source coupled to a fourth supply voltage terminal (4), a gate coupled to said input terminal (15), and having a drain;

a second field effect transistor (17) having a source coupled to said second supply voltage terminal (2), a gate coupled to said input terminal (15), and a drain coupled to said drain of said first field effect transistor (16);

a third field effect transistor (18) having a source coupled to said third emitter of said bipolar transistor (27), and having a gate and a drain;

a fourth field effect transistor (21) having a source coupled to said second supply voltage terminal (2), a drain coupled to said drain of said third field effect transistor (18), and a gate coupled to said input terminal (15);

a fifth field effect transistor (19) having a source coupled to said third emitter of said bipolar transistor (27), a gate coupled to said drain of said third field effect transistor (18), and a drain coupled to said gate of said third field effect transistor (18); and

a sixth field effect transistor (22) having a source coupled to said second supply voltage terminal (2), a gate coupled to said drain of said first field effect transistor (16), and a drain coupled to said drain of said fifth field effect transistor (19).

8. A voltage level conversion circuit according to claim 7 wherein said second means comprises:

a seventh field effect transistor (25) having a source coupled to said third emitter of said bipolar transistor (27), a gate coupled to said drain of said fifth field effect transistor (19), and a drain coupled to said second node (29);

an eighth field effect transistor (26) having a source coupled to said second supply voltage terminal (2), a gate coupled to said gate of said seventh field effect transistor (25), and a drain coupled to said second node (29);

a ninth field effect transistor (23) having a source coupled to said third emitter of said bipolar transistor (27), a gate coupled to said drain of said third field effect transistor (18), and a drain coupled to said first node (31); and

a tenth field effect transistor (24) having a source coupled to said second supply voltage terminal (2), a gate coupled to said gate of said ninth field effect transistor (23), and a drain coupled to said first node (31).

**Patentansprüche**

1. Spannungspegelwandlerschaltkreis in Halbleitertechnologie mit einer festgelegten Durchbruchspannung, wobei der Schaltkreis umfaßt:

einen ersten Versorgungsspannungsanschluß (3) zum Erhalten einer ersten Spannung;

einen zweiten Versorgungsspannungsanschluß (2) zum Erhalten einer zweiten Spannung;

einen Eingangsanschluß (15) zum Erhalten eines Eingangssignals;

einen Ausgangsanschluß (47) zum Bereitstellen eines Ausgangssignals;

eine erste Vorrichtung (13), die zwischen den ersten und zweiten Versorgungsspannungsanschlüssen und an den Eingangsanschluß (15) angeschlossen ist, zum Erzeugen wahrer und komplementierter Signale mit Spannungspegeln größer als der Betrag des Eingangssignals aber niedriger als die Durchbruchspannung;

einer zweiten Vorrichtung (23-26), die zwischen den ersten und zweiten Versorgungsspannungsanschlüssen und der ersten Vorrichtung (13) angeschlossen ist, zum Erhöhen des Stromantriebs der wahren und komplementierten Signale; gekennzeichnet durch:

eine dritte Vorrichtung (32-37), die an ersten und zweiten Knoten (31, 29) mit der zweiten Vorrichtung (23-26) verbunden ist und umfaßt:

einen ersten Kondensator (33), der einen ersten, mit dem ersten Knoten (31) verbundenen Anschluß und einen zweiten Anschluß besitzt;

einen zweiten Kondensator (32), der einen ersten, mit dem zweiten Knoten (29) verbundenen Anschluß und einen zweiten Anschluß besitzt;

eine erste Diode (37), die eine mit dem zweiten Anschluß des ersten Kondensators (33) verbundene Knode und eine Kathode besitzt;

eine zweite Diode ( 36 ), die eine mit dem zweiten Anschluß des zweiten Kondensators (32) verbundene Anode und eine Kathode besitzt;

wobei die dritte Vorrichtung ein verschobenes wahres Signal und ein verschobenes komplementiertes Signal jeweils an den Kathoden der ersten und zweiten Diode erzeugt, wobei der Betrag der Spannungspegel des verschobenen wahren Signals und des verschobenen komplementierten Signals größer als die Durchbruchspannung ist; und

eine vierte Vorrichtung (38, 39, 43-45), die zwischen der dritten Vorrichtung (32-37) und dem Ausgangsanschluß (47) anschlossen ist, zum Erzeugen des Ausgangssignals mit einem Spannungspegel größer als die Durchbruchspannung und mit einer Frequenz, die gleich dem Zweifachen der Frequenz des Eingangssignals ist.

2. Spannungspegelwandlerschaltkreis nach Anspruch 1, wobei die vierte Vorrichtung umfaßt:

einen dritten Kondensator (38), der einen mit dem zweiten Anschluß des zweiten Kondensators (32) verbundenen ersten Anschluß und einen mit der Kathode der ersten Diode (37) verbundenen zweiten Anschluß besitzt;

einen vierten Kondensator (39), der einen mit dem zweiten Anschluß des ersten Kondensators (33) verbundenen ersten Anschluß und einen mit der Kathode der zweiten Diode (36) verbundenen zweiten Anschluß besitzt;

eine dritte Diode (43), die eine mit der Kathode der zweiten Diode (36) verbundene Anode und eine mit dem Ausgangsanschluß (47) verbundene Kathode besitzt;

eine vierte Diode (44), die eine mit der Kathode der ersten Diode (37) verbundene Anode und eine mit dem Ausgangsanschluß (47) verbundene Kathode besitzt; und

einen fünften Kondensator (45), der einen ersten mit dem zweiten Ausgangsanschluß (47) verbundenen Anschluß und einen zweiten mit dem zweiten Versorgungsspannungsanschluß (2) verbundenen Anschluß besitzt.

3. Spannungspegelwandlerschaltkreis nach Anspruch 1, der außerdem einen Bipolartransistor (27) umfaßt, der einen mit einem dritten Versorgungsspannungsanschluß (1) verbundenen Kollektor, eine mit dem ersten Versorgungsspannungsanschluß (3) verbundene Basis, einen mit dem zweiten Anschluß des ersten Kondensators (33) verbundenen ersten Emitter, einen mit dem zweiten Anschluß des zweiten Kondensators (32) verbundenen zweiten Emitter und einen dritten Emitter besitzt.

4. Spannungspegelwandlerschaltkreis nach Anspruch 3, der außerdem eine Zenerdiode (28) umfaßt, die eine mit dem ersten Versorgungsspannungsanschluß (3) verbundene Kathode und eine mit dem zweiten Versorgungsspannungsanschluß (2) verbundene Anode (2) besitzt, um die erste Versorgungsspannung auf einen Betrag kleiner als die Durchbruchspannung zu begrenzen.

5. Spannungspegelwandlerschaltkreis nach Anspruch 3 oder 4, der außerdem eine fünfte Vorrichtung (7-11) umfaßt, die zwischen dem dritten Versorgungsspannungsanschluß (1) und dem zweiten Versorgungsspannungsanschluß (2) angeschlossen ist, um selektiv die erste Spannung an den ersten Versorgungsspannungsanschluß (3) anzulegen.

6. Spannungspegelwandlerschaltkreis nach Anspruch 5, wobei die fünfte Vorrichtung umfaßt:

einen Vorspannungsanschluß (5) zum Erhalten einer Vorspannung;

einen Steuerungsanschluß (6) zum Erhalten eines Steuerungssignals;

einen ersten Feldeffekttransistor (7), der eine mit dem dritten Versorgungsspannungsanschluß (1) verbundene Source und ein mit einem Drain verbundenes Gate besitzt;

einen zweiten Feldeffekttransistor (9), der ein mit dem Drain des ersten Feldeffekttransistors (7) verbundenes Drain, ein mit dem Vorspannungsanschluß (5) verbundenes Gate und eine mit dem zweiten Versorgungsspannungsanschluß (2) verbundene Source besitzt;

einen dritten Feldeffekttransistor (8), der eine mit dem dritten Versorgungsspannungsanschluß (1) verbundene Source, ein mit dem Gate des ersten Feldeffekttransistors (7) verbundenes Gate und ein mit dem ersten Versorgungsspannungsanschluß (3) verbundenes Drain besitzt; und

einen vierten Feldeffekttransistor (11), der ein mit dem ersten Versorgungsspannungsanschluß (3) verbundenes Drain, ein mit dem Steuerungsanschluß (6) verbundenes Gate und eine mit dem zweiten Versorgungsspannungsanschluß (2) verbundene Source besitzt.

7. Spannungspegelwandlerschaltkreis nach Anspruch 3, 4, 5 oder 6, wobei die erste Vorrichtung umfaßt:

einen ersten Feldeffekttransistor (16), der eine mit dem vierten Versorgungsspannungsanschluß (4) verbundene Source, ein mit dem Eingangsanschluß (15) verbundenes Gate und ein Drain besitzt;

einen zweiten Feldeffekttransistor (17), der eine mit dem zweiten Versorgungsspannungsanschluß (2) verbundene Source, ein mit dem Eingangsanschluß (15) verbundenes Gate und ein mit dem Drain des ersten feldeffekttransistors (16) verbundenes Drain besitzt;

einen dritten Feldeffekttransistor (18), der eine mit dem dritten Emitter des Bipolartransistors (27) verbundene Source, ein Gate und ein Drain besitzt;

einen vierten Feldeffekttransistor (21), der eine mit dem zweiten Versorgungsspannungsanschluß (2) verbundene Source, ein mit dem Drain des dritten Feldeffekttransistors (18) verbundenes Drain und ein mit dem Eingangsanschluß (15) verbundenes Gate besitzt;

einen fünften Feldeffekttransistor (19), der eine mit dem dritten Emitter des Bipolartransistors (27) verbundene Source, ein mit dem Drain des dritten Feldeffekttransistors (18) verbundenes Gate und ein mit dem Gate des dritten Feldeffekttransistors (18) verbundenes Drain besitzt;

einen sechsten Feldeffekttransistor (22), der eine mit dem zweiten Versorgungsspannungsanschluß (2) verbundene Source, ein mit dem Drain des ersten Feldeffekttransistors (16) verbundenes Gate und ein mit dem Drain des fünften Feldeffekttransistors (19) verbundenes Drain besitzt.

8. Spannungspegelwandlerschaltkreis nach Anspruch 7, wobei die zweite Vorrichtung umfaßt:

einen siebten Feldeffekttransistor (25), der eine mit dem dritten Emitter des Bipolartransistors (27) verbundene Source, ein mit dem Drain des fünften Feldeffekttransistors (19) verbundenes Gate und ein mit dem zweiten Knoten (29) verbundenes Drain besitzt;

einen achten Feldeffekttransistor (26), der eine mit dem zweiten Versorgungsspannungsanschluß (2) verbundene Source, ein mit dem Gate des siebten Feldeffekttransistors (25) verbundenes Gate und ein mit dem zweiten Knoten (29) verbundenes Drain besitzt;

einen neunten Feldeffekttransistor (23), der eine mit dem dritten Emitter des Bipolartransistors (27) verbundene Source, ein mit dem Drain des dritten Feldeffekttransistors (18) verbundenes Gate und ein mit dem ersten Knoten (31) verbundenes Drain besitzt; und

einen zehnten Feldeffekttransistor (24), der eine mit dem zweiten Versorgungsspannungsanschluß (2) verbundene Source, ein mit dem Gate des neunten Feldeffekttransistors (23) verbundenes Gate und ein mit dem ersten Knoten (31) verbundenes Drain besitzt.

## Revendications

1. Circuit de conversion de niveau de tension, en technologie de semiconducteur, qui possède une tension de rupture définie, ledit circuit comprenant :

une première borne de tension d'alimentation électrique (3) destinée à recevoir une première tension ;

une deuxième borne de tension d'alimentation électrique (2) destinée à recevoir une deuxième tension ;

une borne d'entrée (15) destinée à recevoir un signal d'entrée ;

une borne de sortie (47) destinée à produire un signal de sortie ;

un premier moyen (13) couplé entre lesdites première et deuxième bornes de tension d'alimentation électrique et couplé à ladite borne d'entrée (15) afin de produire des signaux vrais et des signaux en complément logique qui possèdent des niveaux de tension supérieurs à l'amplitude dudit signal d'entrée, mais inférieurs à la tension de rupture ;

un deuxième moyen (23 à 26) couplé entre lesdites première et deuxième bornes de tension d'alimentation électrique et couplé audit premier moyen (13) afin d'augmenter l'excitation de courant desdits signaux vrais et en complément logique ; caractérisé par :

un troisième moyen (32 à 37) couplé audit deuxième moyen (23 à 26) par des premier et deuxième noeuds (31, 29) et comprenant :

un premier condensateur (33) possédant une première borne couplée audit premier noeud (31) et possédant une deuxième borne,

un deuxième condensateur (32) possédant une première borne couplée audit deuxième noeud (29) et possédant une deuxième borne,

une première diode (37) possédant une anode couplée à ladite deuxième borne dudit premier condensateur (33) et une cathode, et

une deuxième diode (36) possédant une anode couplée à ladite deuxième borne dudit deuxième condensateur (32) et une cathode,

ledit troisième moyen produisant un signal vrai décalé et un signal en complément logique décalé sur les cathodes respectives desdites première et deuxième diodes, les amplitudes des niveaux de tension dudit signal vrai décalé et dudit signal en complément logique décalé étant supérieures à la tension de rupture ; et

un quatrième moyen (38, 39, 43 à 45) couplé entre ledit troisième moyen (32 à 37) et ladite borne de sortie (47) afin de produire ledit signal de sortie, qui possède un niveau de tension supérieur à la tension de rupture et qui possède une fréquence égale à deux fois la fréquence dudit signal d'entrée.

2. Circuit de conversion de niveau de tension selon la revendication 1, où ledit troisième moyen comprend :

un troisième condensateur (38) possédant une première borne couplée à ladite deuxième borne dudit deuxième condensateur (32) et possédant une deuxième borne couplée à ladite cathode de ladite première diode (37) ;

un quatrième condensateur (39) possédant une première borne couplée à ladite deuxième borne dudit premier condensateur (33) et possédant une deuxième borne couplée à ladite cathode de ladite deuxième diode (36) ;

une troisième diode (43) possédant une anode couplée à ladite cathode de ladite deuxième diode (36) et une cathode couplée à ladite borne de sortie (47) ;

une quatrième diode (44) possédant une anode couplée à ladite cathode de ladite première diode (37) et une cathode couplée à ladite borne de sortie (47) ; et

un cinquième condensateur (45) possédant une première borne couplée à ladite borne de sortie (47) et une deuxième borne couplée à ladite deuxième borne de tension d'alimentation (2).

3. Circuit de conversion de niveau de tension selon la revendication 1, comprenant en outre un transistor bipolaire (27) ayant un collecteur couplé à une troisième borne de tension d'alimentation électrique (1), une base couplée à ladite première borne de tension d'alimentation électrique (3), un premier émetteur couplé à ladite deuxième borne dudit premier condensateur (33), un deuxième émetteur couplé à ladite deuxième borne dudit deuxième condensateur (32), et un troisième émetteur.

4. Circuit de conversion de niveau de tension selon la revendication 3, comprenant en outre une diode zener (28) possédant une cathode couplée à ladite première borne de tension d'alimentation électrique (3) et une anode couplée à ladite deuxième borne de tension d'alimentation électrique (2) afin de limiter ladite première tension à une amplitude inférieure à la tension de rupture.

5. Circuit de conversion de niveau de tension selon la revendication 3 ou 4, comprenant en outre un cinquième moyen (7 à 11) couplé entre ladite troisième borne de tension d'alimentation électrique (1) et ladite deuxième borne de tension d'alimentation électrique (2) afin de fournir sélectivement ladite première tension à ladite première borne de tension d'alimentation électrique (3).

6. Circuit de conversion de niveau de tension selon la revendication 5, où ledit cinquième moyen comprend :

une borne de tension de polarisation (5) destinée à recevoir une tension de polarisation ;

une borne de commande (6) destinée à recevoir un signal de commande ;

un premier transistor à effet de champ (7) possédant une source couplée à ladite troisième borne de tension d'alimentation électrique (1) et possédant une grille couplée à son drain ;

un deuxième transistor à effet de champ (9) possédant un drain couplé audit drain dudit premier transistor à effet de champ (7), une grille couplée à ladite borne de tension de polarisation (5), et une source couplée à ladite deuxième borne de tension d'alimentation électrique (2) ;

un troisième transistor à effet de champ (8) possédant une source couplée à ladite troisième borne de tension d'alimentation électrique (1), une grille couplée à ladite grille dudit premier transistor à effet de champ (7), et un drain couplé à ladite première borne de tension d'alimentation électrique (3) ; et

un quatrième transistor à effet de champ (11) possédant un drain couplé à ladite première borne de tension d'alimentation électrique (3), une grille couplée à ladite borne de commande (6), et une source couplée à ladite deuxième borne de tension d'alimentation électrique (2).

7. Circuit de conversion de niveau de tension selon la revendication 3, 4, 5 ou 6, où ledit premier moyen comprend :

un premier transistor à effet de champ (16) possédant une source couplée à une quatrième borne de tension d'alimentation électrique (4), une grille couplée à ladite borne d'entrée (15), et possédant un drain ;

un deuxième transistor à effet de champ (17) possédant une source couplée à ladite deuxième borne de tension d'alimentation électrique (2), une grille couplée à ladite borne d'entrée (15), et un drain couplé audit drain dudit premier transistor à effet de champ (16) ;

un troisième transistor à effet de champ (18) possédant une source couplée audit troisième émetteur dudit transistor bipolaire (27), et possédant une grille et un drain ;

un quatrième transistor à effet de champ (21) possédant une source couplée à ladite deuxième borne de tension d'alimentation électrique (2), un drain couplée audit drain dudit troisième transistor à effet de champ (18), et une grille couplée à ladite borne d'entrée (15) ;

un cinquième transistor à effet de champ (19) possédant une source couplée audit troisième émetteur dudit transistor bipolaire (27), une grille couplée audit drain dudit troisième transistor à effet de champ (18), et un drain couplée à ladite grille dudit troisième transistor à effet de champ (18) ; et

un sixième transistor à effet de champ (22) possédant une source couplée à ladite deuxième borne de tension d'alimentation électrique (2), une grille couplée audit drain dudit premier transistor à effet de champ (16), et un drain couplé audit drain dudit cinquième transistor à effet de champ (19).

8. Circuit de conversion de niveau de tension selon la revendication 7, où ledit deuxième moyen comprend :

un septième transistor à effet de champ (25) possédant une source couplée audit troisième émetteur dudit transistor bipolaire (27), une grille couplée audit drain dudit cinquième transistor à effet de champ (19), et un drain couplé audit deuxième noeud (29) ;

un huitième transistor à effet de champ (26) possédant une source couplée à ladite deuxième borne de tension d'alimentation électrique (2), une grille couplée à ladite grille dudit septième transistor à effet de champ (25), et un drain couplé audit deuxième noeud (29) ;

un neuvième transistor à effet de champ (23) possédant une source couplée audit troisième émetteur dudit transistor bipolaire (27), une grille couplée audit drain dudit troisième transistor à effet de champ (18), et un drain couplé audit premier noeud (31) ; et

un dixième transistor à effet de champ (24) possédant une source couplée à ladite deuxième borne de tension d'alimentation électrique (2), une grille couplée à ladite grille dudit neuvième transistor à effet de champ (23), et un drain couplé audit premier noeud (31).

FIG. 1

INPUT TERMINAL 15    5.0V / 0.0V    (A)

NODE 29    19.3V / 0.0V    (B)

NODE 31    19.3V / 0.0V    (C)

NODE 34    38.6V / 19.3V    (D)

NODE 35    38.6V / 19.3V    (E)

NODE 41    57.2V / 37.9V    (F)

NODE 42    57.2V / 37.9V    (G)

OUTPUT TERMINAL 47    56.5V / 37.2V    (H)

FIG. 2